# EUROPEAN PATENT SPECIFICATION

(11) **EP 3 990 274 B1**
(45) Date of publication and mention of the grant of the patent: **10.08.2022**
(21) Application number: 20733019.2
(22) Date of filing: 09.06.2020
(51) Int. Cl.: B32B 5/02, B32B 5/08, B32B 5/26, H01M 10/625, H01M 10/658, H01M 50/24

(54) **NONWOVEN FIBROUS WEB**
FASERVLIESBAHN
NAPPE FIBREUSE NON TISSÉE

(30) Priority: 25.06.2019 US 201962866113 P
(43) Date of publication of application: 04.05.2022
(73) Proprietor: 3M Innovative Properties Company, Saint Paul, Minnesota 55133-3427 (US)
(72) Inventor: HA, Heonjoo, Saint Paul, Minnesota 55133-3427 (US); WU, Tien Tsung, Saint Paul, Minnesota 55133-3427 (US); SCHULTZ, Nathan E., Saint Paul, Minnesota 55133-3427 (US); HOFFDAHL, Gerry A., Saint Paul, Minnesota 55133-3427 (US)
(74) Representative: Bergen, Katja
(86) International application number: PCT/IB2020/055413
(87) International publication number: WO 2020/261012

(56) References cited:
- WO-A1-2011/043860
- WO-A1-2019/090659
- CN-U- 202 319 119

## Description

### Field of the Invention

Provided are flame-resistant nonwoven fabrics to protect the nonwoven for flame resistance and no-fiber-shedding. The provided nonwoven fabrics may be used in thermal and acoustic insulators in automotive and aerospace applications such as battery compartments for electric vehicles. The provided nonwoven fabrics can be particularly suitable for reducing noise in automotive and aerospace applications.

### Background

Thermal insulators reduce heat transfer between structures either in thermal contact with each other or within range of thermal convection or radiation. These materials mitigate the effects of conduction, convection, and/or radiation, and can thus help in stabilizing the temperature of a structure in proximity to another structure at significantly higher or lower temperatures. By preventing overheating of a component or avoiding heat loss where high temperatures are desired, thermal management can be critical in achieving the function and performance demanded in widespread commercial and industrial applications.

Thermal insulators can be particularly useful in the automotive and aerospace technologies. For example, internal combustion engines of automobiles produce a tremendous amount of heat during their combustion cycle. In other areas of the vehicle, thermal insulation is used to protect electronic components sensitive to heat. Such components can include, for example, sensors, batteries, and electrical motors. To maximize fuel economy, it is desirable for thermal insulation solutions to be as thin and lightweight as possible while adequately protecting these components. Ideally, these materials are durable enough to last the lifetime of the vehicle.

Historically, developments in automotive and aerospace technology have been driven by consumer demands for faster, safer, quieter, and more spacious vehicles. These attributes must be counterbalanced against the desire for fuel economy, since enhancements to these consumer-driven attributes generally also increase the weight of the vehicle.

With a 10% weight reduction in the vehicle capable of providing about an 8% increase in fuel efficiency, automotive and aerospace manufacturers have a great incentive to decrease vehicle weight while meeting existing performance targets. Yet, as vehicular structures become lighter, noise can become increasingly problematic. Some noise is borne from structural vibrations, which generate sound energy that propagates and transmits to the air, generating airborne noise. Structural vibration is conventionally controlled using damping materials made with heavy, viscous materials. Airborne noise is conventionally controlled using a soft, pliable material, such as a fiber or foam, capable of absorbing sound energy.

The demand for suitable insulating materials has intensified with the advent of electric vehicles ("EVs"). EVs employ lithium ion batteries that perform optimally within a defined temperature range, more particularly around ambient temperatures. EVs generally have a battery management system that activates an electrical heater if the battery temperature drops significantly below optimal temperatures and activates a cooling system when the battery temperature creeps significantly higher than optimal temperatures. WO 2019/090659 discloses a nonwoven comprising oxidized polyacrylonitrile fibers and 0-40 wt.% reinforcing fibers having an outer surface comprised of a polymer with a melting temperature of 100-300°C, useful for thermally insulating EV batteries.

### Summary

Operations used for heating and cooling EV batteries can substantially deplete battery power that would otherwise have been directed to the vehicle drivetrain. Just as a blanket provides comfort by conserving a person's body heat in cold weather, thermal insulation passively minimizes the power required to protect the EV batteries in extreme temperatures.

Developers of insulation materials for EV battery applications face formidable technical challenges. For instance, EV battery insulation materials should display low thermal conductivity while satisfying strict flame retardant requirements to extinguish or slow the spread of a battery fire. A common test for flame retardancy is the UL-94V0 flame test. It is also desirable for a suitable thermal insulator to resiliently flex and compress such that it can be easily inserted into irregularly shaped enclosures and expand to occupy fully the space around it. Finally, these materials should display sufficient mechanical strength and tear resistance to facilitate handling and installation in a manufacturing process such that there are no loose fibers or fiber shedding.

The provided articles and methods address these problems by using a nonwoven fabric assembly. The nonwoven fabric assembly is flame resistant and minimizes fiber shedding. The reinforcing fibers can at least partially melt when heated to form a bonded web with enhanced strength. The edges of the nonwoven fabric assembly of the current application does not need to be sealed by heat and pressure or other means. The provided nonwoven fabric assembly can also have a low flow resistance rendering the nonwoven fabric better acoustic insulators

In a first aspect, the present disclosure provides a nonwoven fibrous web. The nonwoven fibrous web includes a flame retardant nonwoven fabric coated with a fire retardant, wherein the fire retardant comprises ammonium polyphosphate or alkali metal silicate; and wherein the flame retardant nonwoven fabric has a first major surface and an opposed second major surface; a first nonwoven fabric covering at least a portion of the first major surface; and a second nonwoven fabric covering at least a portion of the second major surface; wherein the first and second nonwoven fabrics each comprise a plurality of randomly-oriented fibers, the plurality of randomly-oriented fibers comprising: at least 60 wt% of oxidized polyacrylonitrile fibers; and from 0 to less than 40 wt% of reinforcing fibers having an outer surface comprised of a (co)polymer with a melting temperature of from 100°C to 350°C; wherein the flame retardant nonwoven fabric and the first and second nonwoven fabrics are bonded together to form a cohesive nonwoven fibrous web.

### Brief Description of the Drawings

As provided herein:

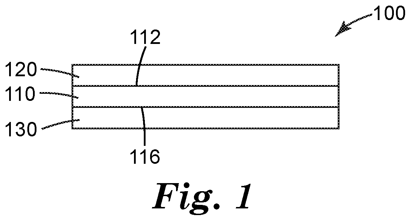

FIG. 1 is a side cross-sectional view of a nonwoven fibrous web according to an exemplary embodiment.

Repeated use of reference characters in the specification and drawings is intended to represent the same or analogous features or elements of the disclosure. It should be understood that numerous other modifications and embodiments can be devised by those skilled in the art, which fall within the scope and spirit of the principles of the disclosure. Drawings may not be to scale.

### DEFINITIONS

As used herein:
"Ambient conditions" means at 25°C and 101.3 kPa pressure.
"Average" means number average, unless otherwise specified.
"Burn Test" means the Burn Test in the examples. "Pass Burn Test" means a article is not burned or caught fire during the Burn Test.
"Copolymer" refers to polymers made from repeat units of two or more different polymers and includes random, block and star (e.g. dendritic) copolymers.
"Median fiber diameter" of fibers in a nonwoven fabric is determined by producing one or more images of the fiber structure, such as by using a scanning electron microscope; measuring the transverse dimension of clearly visible fibers in the one or more images resulting in a total number of fiber diameters; and calculating the median fiber diameter based on that total number of fiber diameters.
"Calendering" means a process of passing a product, such as a polymeric absorbent loaded web through rollers to obtain a compressed material. The rollers may optionally be heated.
"Effective Fiber Diameter" or "EFD" means the apparent diameter of the fibers in a nonwoven fibrous web based on an air permeation test in which air at 1 atmosphere and room temperature is passed at a face velocity of 5.3 cm/sec through a web sample of known thickness, and the corresponding pressure drop is measured. Based on the measured pressure drop, the Effective Fiber Diameter is calculated as set forth in Davies, C.N., The Separation of Airborne Dust and Particles, Institution of Mechanical Engineers, London Proceedings, 1B (1952).
"Polymer" means a relatively high molecular weight material having a molecular weight of at least 10,000 g/mol.
"Size" refers to the longest dimension of a given object or surface.
"Substantially" means to a significant degree, as in an amount of at least 30%, 40, 50, 60, 70, 80, 90, 95, 96, 97, 98, 99, 99.5, 99.9, 99.99, or 99.999%, or 100%.
"Thickness" means the distance between opposing sides of a layer or multilayered article.

### Detailed Description

As used herein, the terms "preferred" and "preferably" refer to embodiments described herein that can afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the term "comprises" and variations thereof do not have a limiting meaning where these terms appear in the accompanying description. Moreover, "a," "an," "the," "at least one," and "one or more" are used interchangeably herein. Relative terms such as left, right, forward, rearward, top, bottom, side, upper, lower, horizontal, vertical, and the like may be used herein and, if so, are from the perspective observed in the particular drawing. These terms are used only to simplify the description, however, and not to limit the scope of the invention in any way.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Where applicable, trade designations are set out in all uppercase letters.

A nonwoven fibrous web according to one embodiment of the invention is illustrated in FIG. 1 and hereinafter referred to by the numeral 100. The nonwoven fibrous web 100 includes a flame retardant nonwoven fabric 110. The flame retardant nonwoven fabric 110 includes a first major surface 112 and an opposed second major surface 116. The flame retardant nonwoven fabric 110 can be coated with a fire retardant. The fire retardant can include ammonium polyphosphate or alkali metal silicate, for example, sodium metasilicate. Ammonium polyphosphate (APP) and sodium metasilicate are flame retardent additive that can contribute as an ionic crosslinker to some extent.

The flame retardant nonwoven fabric 110 can include a bamboo nonwoven, a wool nonwoven, a polyvinyl alcohol nonwoven, or a nonwoven fabric comprising a plurality of randomly-oriented fibers, wherein the plurality of randomly-oriented fibers comprise at least 60 wt% of oxidized polyacrylonitrile fibers and from 0 to less than 40 wt% of reinforcing fibers having an outer surface comprised of a (co)polymer with a melting temperature of from 100°C to 350°C. Bamboo nonwoven can include a needle-punched 100% bamboo nonwoven felt, for example, those sold as "SIMPLY BAMBOO", by FiberCo. Inc. (Fort Worth, TX). Wool nonwoven can include wool nonwoven felt obtained under the trade designation of "SAFETY SHIELD" from Safety Shield Filters (Limerick, Ireland). Polyvinyl alcohol nonwoven can include polyvinyl alcohol crimpled staple fibers (1.7 dtex, 51 mm in length) s obtained from Minifibers (Johnson City, TN). The staple fibers can be processed through a carding machine or a spiked air-laid machine to obtain a nonwoven web.

The nonwoven fibrous web 100 includes a first nonwoven fabric 120 covering at least a portion of the first major surface 112 and a second nonwoven fabric 130 covering at least a portion of the second major surface 116. The flame retardant nonwoven fabric 110 and the first and second nonwoven fabrics 120 and 130 are bonded together to form a cohesive nonwoven fibrous web.

The nonwoven fibrous web can pass a thermal testing, for example, the thermal testing described in examples. The nonwoven fibrous web of the present disclosure can provide the combination of low thermal conductivity, small pore size, and high limiting oxygen index (LOI), thus providing good thermal insulation as well as thermal runaway protection. The nonwoven fibrous web of the present disclosure can prevent the flame retardant nonwoven fabric 110 from being in intimate contact with the flame, slow down the heat transfer and provide structural support for the flame retardant nonwoven fabric 110 to form char.

The first and second nonwoven fabrics 120 and 130 are comprised of a plurality of randomly-oriented fiber, including oxidized polyacrylonitrile fibers. Oxidized polyacrylonitrile fibers 108 include those available under the trade designations PYRON (Zoltek Corporation, Bridgeton, MO) and PANOX (SGL Group, Meitingen, GERMANY).

The oxidized polyacrylonitrile fibers preferably have a fiber diameter and length that enables fiber entanglements within the nonwoven fabric. The fibers, however, are preferably not so thin that web strength is unduly compromised. The fibers can have a median fiber diameter of from 2 micrometers to 150 micrometers, from 5 micrometers to 100 micrometers, from 5 micrometers to 25 micrometers, or in some embodiments, less than, equal to, or greater than 1 micrometer, 2, 3, 5, 7, 10, 15, 20, 25, 30, 40, 50 micrometers.

Inclusion of long fibers can reduce fiber shedding and further enhance strength of the nonwoven fabric along transverse directions. The oxidized polyacrylonitrile fibers can have a median fiber length of from 10 millimeters to 100 millimeters, from 15 millimeters to 100 millimeters, from 25 millimeters to 75 millimeters, or in some embodiments, less than, equal to, or greater than 10 millimeters, 12, 15, 17, 20, 25, 30, 35, 40, 45, 50, 55, 60, 65, 70, or 75 millimeters.

The oxidized polyacrylonitrile fibers used to form the first and second nonwoven fabric 120 and 130 can be prepared from bulk fibers. The bulk fibers can be placed on the inlet conveyor belt of an opening/mixing machine in which they can be teased apart and mixed by rotating combs. The fibers are then blown into web-forming equipment where they are formed into a dry-laid nonwoven fabric.

As an alternative, a SPIKE air-laying forming apparatus (commercially available from FormFiber NV, Denmark) can be used to prepare nonwoven fabric containing these bulk fibers. Details of the SPIKE apparatus and methods of using the SPIKE apparatus in forming air-laid webs is described in U.S. Patent Nos. 7,491,354 (Andersen) and 6,808,664 (Falk et al.).

Bulk fibers can be fed into a split pre-opening and blending chamber with two rotating spike rollers with a conveyor belt. Thereafter, the bulk fibers are fed into the top of the forming chamber with a blower. The fibrous materials can be opened and fluffed in the top of the chamber and then fall through the upper rows of spikes rollers to the bottom of the forming chamber passing thereby the lower rows of spike rollers. The materials can then be pulled down on a porous endless belt/wire by a combination of gravity and vacuum applied to the forming chamber from the lower end of the porous forming belt/wire.

Alternatively, the first and second nonwoven fabric 120 and 130 can be formed in an air-laid machine. The web-forming equipment may, for example, be a RANDO-WEBBER device commercially-available from Rando Machine Co., Macedon, NY. Alternatively, the web-forming equipment could be one that produces a dry-laid web by carding and cross-lapping, rather than by air-laying. The cross-lapping can be horizontal (for example, using a PROFILE SERIES cross-lapper commercially-available from ASSELIN-THIBEAU of Elbeuf sur Seine, 76504 France) or vertical (for example, using the STRUTO system from the University of Liberec, Czech Republic or the WAVE-MAKER system from Santex AG of Switzerland).

In some embodiments, the nonwoven fabric of the current application has a low flow resistance, for example less than 1000 Rayl, 100 Rayl, 50 Rayl, 30 Rayl, 25 Rayl, 20 Rayl, 15 Rayl, or 10 Rayl. Low flow resistance can render the nonwoven fabric -core assembly better acoustic insulators.

In some embodiments, the nonwoven fabric of the current application has a high flow resistance, for examples higher than 1000 Rayl, or 10,000 Rayl. High flow resistance can render the nonwoven fabric better for thermal insulation, since such high flow resistance help to block the air flow conduction.

In some embodiments, the first and second nonwoven fabric 120 and 130 can includes entangled regions. The entangled regions represent places where two or more discrete fibers have become twisted together. The fibers within these entangled regions, although not physically attached, are so intertwined that they resist separation when pulled in opposing directions.

In some embodiments, the entanglements are induced by a needle tacking process or hydroentangling process. Each of these processes are described in more detail below.

The nonwoven fabric can be needle tacked using a conventional needle tacking apparatus (e.g., a needle tacker commercially available under the trade designation DILO from Dilo of Germany, with barbed needles (commercially available, for example, from Foster Needle Company, Inc., of Manitowoc, WI) whereby the substantially entangled fibers described above are needle tacked fibers. Needle tacking, also referred to as needle punching, entangles the fibers perpendicular to the major surface of the nonwoven fabric by repeatedly passing an array of barbed needles through the web and retracting them while pulling along fibers of the web.

The needle tacking process parameters, which include the type(s) of needles used, penetration depth, and stroke speed, are not particularly restricted. Further, the optimum number of needle tacks per area of mat will vary depending on the application. Typically, the nonwoven fabric is needle tacked to provide an average of at least 5 needle tacks/cm². Preferably, the mat is needle tacked to provide an average of about 5 to 60 needle tacks/cm², more preferably, an average of about 10 to about 20 needle tacks/cm².

Further options and advantages associated with needle tacking are described elsewhere, for example in U.S. Patent Publication Nos. 2006/0141918 (Rienke) and 2011/0111163 (Bozouklian et al.).

The nonwoven fabric can be hydroentangled using a conventional water entangling unit (commercially available from Honeycomb Systems Inc. of Bidderford, ME.; also see U.S. Patent No. 4,880,168 (Randall, Jr.), the disclosure of which is incorporated herein by reference for its teaching of fiber entanglement). Although the preferred liquid to use with the hydroentangler is water, other suitable liquids may be used with or in place of the water.

In a water entanglement process, a pressurized liquid such as water is delivered in a curtain-like array onto a nonwoven fabric, which passes beneath the liquid streams. The mat or web is supported by a wire screen, which acts as a conveyor belt. The mat feeds into the entangling unit on the wire screen conveyor beneath jet orifices. The wire screen is selected depending upon the final desired appearance of the entangled mat. A coarse screen can produce a mat having perforations corresponding to the holes in the screen, while a very fine screen (e.g., 100 mesh) can produce a mat without the noticeable perforations.

In some embodiments, the first and second nonwoven fabric 120 and 130 can include both a plurality of oxidized polyacrylonitrile fibers and a plurality of reinforcing fibers.. The reinforcing fibers may include binder fibers, which have a sufficiently low melting temperature to allow subsequent melt processing of the nonwoven fabric 200. Binder fibers are generally polymeric, and may have uniform composition or may contain two or more components. In some embodiments, the binder fibers are bi-component fibers comprised of a core polymer that extends along the axis of the fibers and is surrounded by a cylindrical shell polymer. The shell polymer can have a melting temperature less than that of the core polymer. The reinforcing fibers can include at least one of monocomponent or multi-component fibers. In some embodiments, the reinforcing fiber can include polyethylene terephthalate, polyphenylene sulfide, poly-aramid, and/or polylactic acid. In some embodiments, the reinforcing fibers can be multicomponent fibers having an outer shealth comprising polyolefin. In some embodiments, the polyolefin can be selected from the group consisting of polyethylene, polypropylene, polybutylene, polyisobutylene and combinations thereof.

As used herein, however, "melting" refers to a gradual transformation of the fibers or, in the case of a bi-component shell/core fiber, an outer surface of the fiber, at elevated temperatures at which the polyester becomes sufficiently soft and tacky to bond to other fibers with which it comes into contact, including oxidized polyacrylonitrile fibers and any other binder fibers having its same characteristics and, as described above, which may have a higher or lower melting temperature.

Useful binder fibers have outer surfaces comprised of a polymer having a melting temperature of from 100°C to 450°C, or in some embodiments, less than, equal to, or greater than, 100°C, 105, 110, 115, 120, 125, 130, 135, 140, 145, 150, 160, 170, 180, 190, 200, 210, 220, 230, 240, 250, 260, 270, 280, 290, 300, 325, 350, 375, 400, 425°C.

Exemplary binder fibers include, for example, a bi-component fiber with a polyethylene terephthalate core and a copolyester sheath. The sheath component melting temperature is approximately 230°F (110°C). The binder fibers can also be a polyethylene terephthalate homopolymer or copolymer rather than a bi-component fiber.

The binder fibers increase structural integrity in the insulator 200 by creating a three-dimensional array of nodes where constituent fibers are physically attached to each other. These nodes provide a macroscopic fiber network, which increases tear strength and tensile modulus, preserves dimensional stability of the end product, and minimizes fiber shedding. Advantageously, incorporation of binder fibers can allow bulk density to be reduced while preserving structural integrity of the nonwoven fabric, which in turn decreases both weight and thermal conductivity.

It was found that the thermal conductivity coefficient □ for the nonwoven fabric 100, 200 can be strongly dependent on its average bulk density. When the average bulk density of the nonwoven fabric is significantly higher than 50 kg/m³, for example, a significant amount of heat can be transmitted through the insulator by thermal conduction through the fibers themselves. When the average bulk density is significantly below 15 kg/m³, heat conduction through the fibers is small but convective heat transfer can become significant. Further reduction of average bulk density can also significantly degrade strength of the nonwoven fabric, which is not desirable.

In exemplary embodiments, the first and second nonwoven fabric 120 and 130 have a basis weight of from 10 gsm to 500 gsm, 30 gsm to 500 gsm, 30 gsm to 400 gsm, 30 gsm to 300 gsm, or in some embodiments less than, equal to, or greater than 10 gsm, 16, 17, 18, 19, 20, 22, 24, 25, 26, 28, 30, 32, 35, 37, 40, 42, 45, 47, 50, 60, 70, 80, 90, 100, 200, 300, 400, 500 gsm.

In exemplary embodiments, the first and second nonwoven fabric 120 and 130 have an average bulk density of from 100 kg/m³ to 1500 kg/m³, 150 kg/m³ to 1000 kg/m³, 200 kg/m³ to 500 kg/m³, or in some embodiments less than, equal to, or greater than 100 kg/m³, 150, 200, 250, 300, 350, 400, 450, 500, 550, 600, 650, 700, 750, 800, 850, 900, 950, 1000, 1100, 1200, 1300, 1400, or 1500 kg/m³.

The oxidized polyacrylonitrile fibers in the nonwoven fabric are not combustible. Surprisingly, it was found that combustion of the reinforcing fibers in the FAR 25-856a flame test did not result in significant dimensional changes (no shrinkage and no expansion) in the nonwoven fabric. The nonwoven fabric can pass the UL-94V0 flame test. This benefit appears to have been the effect of the fiber entanglements perpendicular to the major surface of the nonwoven fabric.

The oxidized polyacrylonitrile fibers can be present in any amount sufficient to provide adequate flame retardancy and insulating properties to the nonwoven fabric. The oxidized polyacrylonitrile fibers can be present in an amount of from 60 wt% to 100 wt%, 70 wt% to 100 wt%, 81 wt% to 100 wt%, or in some embodiments, less than, equal to, or greater than 50 wt%, 55, 60, 65, 70, 75, 80, 85, 90, or 95 wt%, or less than or equal to 100 wt%. The reinforcing fibers can be present in an amount of from 0 wt% to less than 40 wt%, 3 wt% to 30 wt%, 0 wt% to 19 wt%, 3 wt% to 19 wt%, or in some embodiments, equal to or greater than 0 wt%, or less than, equal to, or greater than 1 wt%, 2, 3, 4, 5, 7, 10, 15, 20, 25, 30, 35, or 40 wt%.

Preferred weight ratios of the oxidized polyacrylonitrile fibers to reinforcing fibers bestow both high tensile strength to tear resistance to the nonwoven fabric as well as acceptable flame retardancy; for instance, the ability to pass the UL-94V0 flame test. The weight ratio of oxidized polyacrylonitrile fibers to reinforcing fibers can be at least 4:1, at least 5:1, at least 10:1, or in some embodiments, less than, equal to, or greater than 4:1, 5:1, 6:1, 7:1, 8:1, 9:1, or 10:1.

Optionally, the oxidized polyacrylonitrile fibers and reinforcing fibers are each crimped to provide a crimped configuration (e.g., a zigzag, sinusoidal, or helical shape). Alternatively, some or all of the oxidized polyacrylonitrile fibers and reinforcing have a linear configuration. The fraction of oxidized polyacrylonitrile fibers and/or reinforcing fibers that are crimped can be less than, equal to, or greater than 5%, 10, 15, 20, 25, 30, 40, 50, 60, 70, 80, 90, or 100%. Crimping, which is described in more detail in European Patent No. 0 714 248, can significantly increase the bulk, or volume per unit weight, of the nonwoven fibrous web.

The nonwoven fabrics of the thermal insulators described can have any suitable thickness based on the space allocated for the application at hand. For common applications, the nonwoven fabrics can have a thickness of from 0.1 mm to 1 cm or a thickness of less than 1 millimeter or 0.5 millimeters.

As described previously, many factors influence the mechanical properties displayed by the nonwoven fabric, including fiber dimensions, the presence of binding sites on the reinforcing fibers, fiber entanglements, and overall bulk density. Tensile strength and tensile modulus are metrics by which the properties of the nonwoven fabric may be characterized.

Tensile strength represents the resistance of the nonwoven fabric to tearing or permanently distorting and can be at least 28 kPa, at least 32 kPa, at least 35 kPa, or in some embodiments, less than, equal to, or greater than 28 kPa, 29, 30, 31, 32, 33, 34, 35, 36, 37, 38, 39, 40, 42, 44, 45, 47, or 50 kPa.

Surprisingly, it was found that entangling the fibers of the nonwoven fabric perpendicular to the major surfaces of the web to produce a material having a bulk density in the range of from 15 kg/m³ to 500 kg/m³ solved a technical problem associated with volumetric expansion in the UL-94V0 or FAR 25-856a flame test. Specifically, it was discovered that while conventional oxidized polyacrylonitrile materials were observed to swell substantially during flame testing, the provided thermal insulators do not. In some embodiments, the provided nonwoven fabrics deviate less than 10%, less than 7%, less than 5%, less than 4%, or less than 3%, or in some embodiments, less than, equal to, or greater than 10%, 9, 8, 7, 6, 5, 4, or 3% in thickness after flame testing, relative to its original dimensions.

The first and second nonwoven fabric 120 and 130 may optionally include additional layers. To assist in installation, for example, any of these exemplary thermal insulators may further include an adhesive layer, such as a pressure-sensitive adhesive layer or other attachment layer extending across and contacting the nonwoven fabric. As another possibility, any of these insulators may include a solid thermal barrier such as an aluminum sheet or foil layer adjacent to the nonwoven fabric. For some applications, one or more acoustically insulating layers may also be coupled to the nonwoven fabric.

The nonwoven fabric can be made by mixing a plurality of oxidized polyacrylonitrile fibers with a plurality of reinforcing fibers to form a mixture of randomly-oriented fibers as described in the commonly owned PCT Patent Publication No. WO 2015/080913 (Zillig et al). The mixture of randomly-oriented fibers is then heated to a temperature sufficient to melt the outer surfaces of the plurality of reinforcing fibers.

In some embodiments, the major surface of the nonwoven fabric can be smoothed. The smoothed surfaces may be obtained by any known method. For example, smoothing could be achieved by calendaring the nonwoven fibrous web, heating the nonwoven fibrous web, and/or applying tension to the nonwoven fibrous web. In some embodiments, the smoothed surfaces are skin layers produced by partial melting of the fibers at the exposed surfaces of the nonwoven fibrous web.

In some embodiments, there may be a density gradient at the smoothed surface. For example, portions of the smoothed surface proximate to the exposed major surface may have a density greater than portions remote from the exposed major surface. Increasing bulk density at one or both of the smoothed surfaces can further enhance tensile strength and tear resistance of the nonwoven fibrous web. The smoothing of the surface can also reduce the extent of fiber shedding which would otherwise occur in handling or transporting the non-woven fabric. Still another benefit is the reduction in thermal convection by impeding the passage of air through the nonwoven fibrous web. The one or both smoothed surfaces may, in some embodiments, be non-porous such that air is prevented from flowing through the nonwoven fabric.

### EXAMPLES

Objects and advantages of this disclosure are further illustrated by the following non-limiting examples, but the materials and amounts thereof recited in these examples, as well as other conditions and details, should not be construed to unduly limit this disclosure.

**Materials Used in the Examples**

| Abbreviation | Description and Source |
|---|---|
| OPAN | Oxidized polyacrylonitrile crimped staple fibers, 1.7 dtex, 50 mm in length was obtained under the trade designation of "ZOLTEK OX" from Zoltek, St. Louis, MO |
| PVA | Polyvinyl alcohol crimpled staple fibers, 1.7 dtex, 51 mm in length, grade R230640 was obtained from Minifibers, Johnson City, TN |
| Melty | Core/shell = flame retardant polyester/polyethylene bi-component staple fibers, 3.3 dtex, 50 mm in length, grade T-276 was obtained from Trevira, Bobingen, Germany |
| GF | Woven glass fiber, 3 oz. grade G21160 was obtained from CST The Composite Store, Tehachapi, CA |
| Woven Basalt | Plain weave basalt fiber, grade PW-108-9-56 (100 gsm) and PW-350-13-100 (300 gsm) were obtained from Sudaglass Fiber Technology, Houston, TX |
| Nonwoven Basalt | 40 gsm nonwoven basalt fibers, grade SV-40-120 obtained from Sudaglass Fiber Technology, Houston, TX |
| Yellow Foam | Polyvinyl alcohol open-cell foam, sold as "COMPRESSED PVA FACIAL SPONGES" obtained from Appearus, City of Industry, CA |
| Wool | Wool nonwoven felt, obtained under the trade designation of "SAFETY SHIELD" from Safety Shield Filters, Limerick, Ireland |
| Bamboo | Needle-punched 100% bamboo nonwoven felt, sold as "SIMPLY BAMBOO" obtained from FiberCo. Inc., Fort Worth, TX |
| APP solution | 45 wt% solids ammonium polyphosphate solution obtained under the trade designation of "EXOLIT AP 420" from Clariant, Muttenz, Switzerland |
| NaS solution | 37.5 wt% solids sodium silicate aqueous solution (SiO₂:Na₂O stoichiometric ratio = 2.6-3.2:1) obtained under the trade designation of "N" from PQ Corporation, Malvern, PA |

### Test Methods

The flame resistant foams and nonwoven fibrous webs of the invention were evaluated according to the following test methods.

### Basis Weight Test

A 10 cm X 10 cm (0.01 m² area) square sample was weighed, and the Basis Weight (BW) expressed as the ratio of sample weight to area, expressed in grams per square meter (gsm).

### Burn Test

A torch burner (Basic Bunsen Burner - Natural Gas, Eisco Labs, Ambala, India) with a diameter of 1 cm was used for the burn test. Methane gas of 70 L/min was controlled using a flow meter (SHO-RATE, Brooks Instrument, Hatfield, PA) which was connected to the torch burner using a flexible tubing (EW-06424-76, Cole-Parmer, Vernon Hills, IL). The torch burner was stationed below an O-ring metal sample holder. An O-ring sample holder was approximately 23 cm above the bench surface. An expanded stainless steel metal sheet (3/4-#9, Direct Metals, Kennesaw, GA) was used to place the sample above the O-ring. Unless otherwise stated, a sandwich structure was laid down on the metal sheet in the order (OPAN scrim) - (FR coated foam or nonwoven) - (OPAN scrim), and a T-type thermocouple was placed on top of the sandwich structure. A metal ring weighing about 34 grams was placed on top of the whole construction for better thermocouple contact with the material. The samples were heated with an open flame from the torch burner that was 800-850°C in temperature and 7 cm below the metal sheet. The thermocouple temperature was recorded at intervals of 15 seconds up to 4 minutes and then intervals of 1 minute up to 6 minutes.

### Preparatory Example 1: APP and NaS solution preparation

APP and NaS solutions were used as received.

### Preparatory Example 2: Coating flame retardant (FR) solution into a foam

The foams were coated with APP solution by wetting the foam first with water to facilitate uptake of the fire retardant (FR) additives. The foam was submerged in de-ionized (DI) water and then rolled with a rubber roller to remove any air bubbles. While the sample was still wet, FR solution was poured in an excess amount to soak into the foam. Then the foams were rolled using a roller with enough force to remove entrained air and increase uniformity. Then the foams were dried under flowing nitrogen gas in an oven at room temperature until it reached a constant weight. The coating weight of the foam was adjusted by either saturating and wiping off the excess solution or saturating and then squeezing out the excess with a roller.

### Preparatory Example 3: Coating FR solution into a nonwoven

A weighed amount of NaS solution was directly poured on top of the nonwoven and was spread evenly using a grooved roll. Since the endothermic reaction takes place at low temperature, the sample was dried at ambient condition for maximum fire barrier performance. Moderate heating of 50°C can be applied to accelerate the process. Other means of drying water, like ultrasonics, can also assist the process, which was not used in the examples. All samples prepared using NaS solution had a significant reduction in thickness due to the compression during roll coating. The basis weight (BW) of the sample also increased substantially because of the high density of the sodium silicate.

### Preparatory Example 4: Preparation of OPAN scrim

OPAN staple fibers were processed through a random carding machine as described in the international patent applications CN2017/110372, filed November 10, 2017, and CN2018/096648, filed July 23, 2018. A multilayer of 20 gsm carded OPAN webs were needle-punched to form a target BW scrim and then hot pressed at 260°C and 20-ton pressure for1 minute using a hot press for handle-ability.

### Comparative Example 1: Scrim material and structure

Different scrim materials were compared by sandwiching APP coated Yellow Foam and conducting a burn test as previously described. As shown in Table 1, OPAN scrim outperformed other materials including Basalt and GF, which are commonly used by industries. While all materials were inherently nonflammable, OPAN scrim thermal barrier performance was better for two main reasons. First, being able to effectively block the gas conduction through the article with small pores. This is an inherent characteristic of a randomly oriented nonwoven scrim. Second, the OPAN is an organic material and therefore has low thermal conductivity. This indicates that OPAN scrim can (1) prevent the core material from being in intimate contact with the flame while (2) slowing down the heat transfer and (3) providing structural support for the core material to char effectively.

**Table 1. Temperature data for APP coated PVA foams exposed to an 800°C flame using a different scrim material. Samples were in the order of scrim-APP coated Yellow Foam)-(scrim).**

| **Sample Name** | | **Nonwoven OPAN 100 gsm** | **Woven Basalt 300 gsm** | **Woven Basalt 100 gsm** | **Nonwoven Basalt 40 gsm** | **Woven GF 100 gsm** | **Nonwoven OPAN 40 gsm** |
|---|---|---|---|---|---|---|---|
| **Scri m** | **Material** | OPAN | Basalt | | | GF | OPAN |
| | **Thickness (mm)** | 0.50 | 0.32 | 0.09 | 0.65 | 0.09 | 0.40 |
| | **BW (gsm)** | 100 | 292 | 97 | 39 | 104 | 38 |
| | | | | | | | |

| **Time (min)** | | **T (°C)** | **T (°C)** | **T (°C)** | **T (°C)** | **T (°C)** | **T (°C)** |
|---|---|---|---|---|---|---|---|
| 0:00 | | 23 | 22 | 22 | 22 | 23 | 22 |
| 0:15 | | 27 | 24 | 25 | 26 | 27 | 26 |
| 0:30 | | 32 | 27 | 30 | 30 | 33 | 30 |
| 0:45 | | 37 | 33 | 42 | 37 | 47 | 36 |
| 1:00 | | 47 | 47 | 61 | 48 | 64 | 43 |
| 1:15 | | 57 | 66 | 81 | 59 | 79 | 53 |
| 1:30 | | 65 | 78 | 91 | 69 | 92 | 61 |
| 1:45 | | 73 | 91 | 107 | 78 | 107 | 68 |
| 2:00 | | 77 | 103 | 123 | 88 | 122 | 74 |
| 2:15 | | 83 | 116 | 136 | 100 | 138 | 83 |
| 2:30 | | 89 | 128 | 149 | 109 | 152 | 90 |
| 2:45 | | 94 | 140 | 161 | 121 | 166 | 100 |
| 3:00 | | 98 | 153 | 170 | 133 | 180 | 111 |
| 3:15 | | 106 | 165 | 182 | 146 | 195 | 119 |
| 3:30 | | 113 | 176 | 195 | 155 | 213 | 129 |
| 3:45 | | 120 | 186 | 209 | 164 | 227 | 138 |
| 4:00 | | 126 | 198 | 219 | 174 | 238 | 147 |
| 5:00 | | 148 | 244 | 259 | 214 | 292 | 183 |
| 6:00 | | 170 | 280 | 267 | 244 | 325 | 218 |

### Example 1: PVA and OPAN Nonwoven (NW) coated with APP solution

The core PVA and OPAN staple fibers were processed using a spiked air-laid process as described in international patent applications CN2017/110372, filed November 10, 2017, and CN2018/096648, filed July 23, 2018. Table 2 summarizes the core layer composition and temperature profile of each sample. All samples were sandwiched between two 120 gsm OPAN carded webs. PVA NW without any FR additives sandwiched between OPAN scrims did not show a noticeable flame barrier performance. Replacing 30% of PVA NW with OPAN NW substantially improved the thermal and dimensional stability.

**Table 2. The temperature profile for PVA NW and PVA/OPAN NW without any FR additives.**

| **Sample Name** | | PVA/Melty | PVA/OPAN/Melty |
|---|---|---|---|
| **Core Material** | **Material** | PVA = 90%, Melty = 10% | PVA = 60%, OPAN = 30%, Melty = 10% |
| | **NW Weight (g)** | 1.55 | 1.71 |
| | **BW (gsm)** | 150 | 166 |
| | | | |

| **Time (min)** | | **T (°C)** | **T (°C)** |
|---|---|---|---|
| 0:00 | | 25 | 25 |
| 0:15 | | 41 | 33 |
| 0:30 | | 58 | 48 |
| 0:45 | | 68 | 64 |
| 1:00 | | 80 | 77 |
| 1:15 | | 95 | 92 |
| 1:30 | | 123 | 113 |
| 1:45 | | 156 | 136 |
| 2:00 | | 187 | 163 |
| 2:15 | | 214 | 188 |
| 2:30 | | 234 | 215 |
| 2:45 | | 252 | 238 |
| 3:00 | | 263 | 259 |
| 3:15 | | 274 | 273 |
| 3:30 | | 281 | 284 |
| 3:45 | | 289 | 290 |
| 4:00 | | 298 | 292 |
| 5:00 | | 329 | 288 |
| 6:00 | | 356 | 285 |

Table 3 summarizes the core layer composition and temperature profile of each sample. PVA NW with APP coating sandwiched between OPAN scrims shows better flame barrier properties compared to noncoated samples in Table 2. Noticeably, PVA NW blended with OPAN NW can match the performance of PVA/APP sample with less APP.

**Table 3. The temperature profile for PVA NW and PVA/OPAN NW coated with APP.**

| **Sample Name** | | **PVA/Melty APP** | **PVA/OPAN/Melty APP** |
|---|---|---|---|
| **Core Material** | **Material** | PVA = 90%, Melty = 10% | PVA = 60%, OPAN = 30%, Melty = 10% |
| | **Initial NW Weight (g)** | 0.92 | 1.10 |
| | **Total Weight After Coating (g)** | 9.77 | 7.13 |
| | **Added APP Amount (g)** | 8.85 | 6.03 |
| | **Total BW (gsm)** | 946 | 691 |
| | | | |

| **Time (min)** | | **T (°C)** | **T (°C)** |
|---|---|---|---|
| 0:00 | | 25 | 24 |
| 0:15 | | 27 | 28 |
| 0:30 | | 37 | 37 |
| 0:45 | | 49 | 49 |
| 1:00 | | 62 | 63 |
| 1:15 | | 81 | 85 |
| 1:30 | | 112 | 109 |
| 1:45 | | 145 | 135 |
| 2:00 | | 173 | 158 |
| 2:15 | | 193 | 175 |
| 2:30 | | 208 | 190 |
| 2:45 | | 219 | 200 |
| 3:00 | | 226 | 206 |
| 3:15 | | 232 | 213 |
| 3:30 | | 237 | 217 |
| 3:45 | | 242 | 221 |
| 4:00 | | 245 | 224 |
| 5:00 | | 241 | 233 |
| 6:00 | | 242 | 237 |

If one compares the amount of APP incorporated in the PVA NW core layer with PVA foams (Yellow Foam), it is evident that NW can hold more FR additives. For example, PVA foams were 4 grams on average, and 8-12 grams of APP was added to achieve compelling thermal barrier properties, which leads to a basis weight of 1,500-2,000 gsm. In contrast, NW weighed 1.0-1.5 grams, and 8-16 grams of APP can be added to target basis weight of 1,000-1,700 gsm. Therefore, the benefits of using foam are: (1) mechanically more robust than NW and (2) higher consistency between samples. The advantage of using NW are: (1) extremely thin after coating with FR and (2) lower in BW with the same amount of FR compared to foams.

### Example 2: Natural fibers coated with APP solution

Considering that a good char former (e.g., PVA) shows excellent thermal barrier properties by having OPAN NW as the scrim and APP as the FR coating, additional exploration was done using other char forming materials, such as bamboo fibers and wool. Both were obtained as NW felts from an outside source and were coated with APP solution as described above. All samples were sandwiched between two 120 gsm OPAN carded webs. Like PVA NW, Bamboo and Wool both charred well in the given sandwich construction.

**Table 4. The temperature profile for natural fibers coated with APP.**

| | | | |
|---|---|---|---|
| **Core Material** | **Material** | Bamboo | Wool |
| | **Initial NW Weight (g)** | 2.20 | 5.00 |
| | **Total Weight After Coating (g)** | 15.58 | 12.07 |
| | **Added APP Amount (g)** | 13.38 | 7.07 |
| | **Thickness (mm)** | 1.80 | 4.00 |
| | **Total BW (gsm)** | 1509 | 1169 |
| | | | |

| **Time (min)** | | **T (°C)** | **T (°C)** |
|---|---|---|---|
| 0:00 | | 23 | 24 |
| 0:15 | | 30 | 30 |
| 0:30 | | 47 | 49 |
| 0:45 | | 64 | 64 |
| 1:00 | | 77 | 81 |
| 1:15 | | 94 | 105 |
| 1:30 | | 118 | 144 |
| 1:45 | | 145 | 183 |
| 2:00 | | 172 | 217 |
| 2:15 | | 196 | 244 |
| 2:30 | | 216 | 260 |
| 2:45 | | 235 | 269 |
| 3:00 | | 248 | 275 |
| 3:15 | | 255 | 279 |
| 3:30 | | 261 | 284 |
| 3:45 | | 263 | 286 |
| 4:00 | | 266 | 285 |
| 5:00 | | 273 | 290 |
| 6:00 | | 272 | 293 |

### Example 3: PVA and OPAN NW coated with NaS solution

Table 5 summarizes the temperature profile of each sample with NaS solution coating. All samples were sandwiched between two 120 gsm OPAN carded webs. In Table 5 below, OPAN NW and PVA NW refer to a core material with no NaS coating, while the other two samples were coated with 15 g of NaS solution on each side of the web (i.e., top and bottom).

**Table 5. The temperature profile for neat and NaS solution coated OPAN and PVA NW as a core material.**

| **Sample Name** | | OPAN NW | NaS OPAN | PVA NW | NaS PVA NW |
|---|---|---|---|---|---|
| **Core Material** | **Material** | OPAN NW | NaS coated OPAN NW | PVA NW | NaS coated PVA NW |
| | **Thickness (mm)** | 1.66 | 0.95 | 9.25 | 0.82 |
| | **Total Weight After Coating (g)** | 3.06 | 8.39 | 1.46 | 9.18 |
| | **Total BW (gsm)** | 300 | 810 | 140 | 890 |
| | | | | | |

| **Time (min)** | | **T (°C)** | **T (°C)** | **T (°C)** | **T (°C)** |
|---|---|---|---|---|---|
| 0:00 | | 26 | 23 | 26 | 22 |
| 0:15 | | 46 | 28 | 36 | 24 |
| 0:30 | | 76 | 45 | 64 | 37 |
| 0:45 | | 125 | 69 | 125 | 52 |
| 1:00 | | 173 | 86 | 200 | 64 |
| 1:15 | | 213 | 94 | 262 | 70 |
| 1:30 | | 240 | 100 | 301 | 75 |
| 1:45 | | 260 | 103 | 325 | 80 |
| 2:00 | | 272 | 105 | 336 | 85 |
| 2:15 | | 281 | 106 | 343 | 90 |
| 2:30 | | 283 | 132 | 346 | 95 |
| 2:45 | | 284 | 165 | 348 | 98 |
| 3:00 | | 286 | 193 | 348 | 108 |
| 3:15 | | 287 | 220 | 348 | 125 |
| 3:30 | | 288 | 239 | 352 | 145 |
| 3:45 | | 288 | 253 | 352 | 165 |
| 4:00 | | 287 | 265 | 351 | 187 |
| 5:00 | | 288 | 281 | 353 | 239 |
| 6:00 | | 281 | 285 | 352 | 253 |

### Example 4: Effect of water content during coating: OPAN NW

Table 6 summarizes the temperature profile of OPAN NW as the core material but using a different concentration of NaS solution. The purpose of this set of experiment was to understand the importance of NaS content relative to the water content. While adding more water to the NaS solution can reduce the viscosity of the fluid, and therefore, make it more accessible to coat the NW, the total concentration of the NaS is decreased accordingly. To understand the effect of water content to the fire barrier performance, three samples were prepared and compared: (1) control sample used 30 g of NaS on each side of the core NW, (2) 45 g of NaS solution was diluted with 15 g of water, and then split into half to coat each side of the NW (denoted as Less NaS), (3) while using the same amount of NaS solution as the control sample, additional 30 g of water was added to reduce the viscosity but maintain the total amount of NaS incorporated into the web. All samples were sandwiched between two 120 gsm OPAN carded webs.

**Table 6. The temperature profile for OPAN NW coated with different concentration of NaS solution.**

| **Sample Name** | | **OPAN Control** | **OPAN Less NaS** | **OPAN Less Viscosity** |
|---|---|---|---|---|
| **NaS Solution** | **Solution/Water (g/g)** | 60/0 | 45/15 | 60/30 |
| | **Total NaS Solids (g)** | 22.5 | 16.9 | 22.5 |
| **Core Material** | **Material** | 60 gsm OPAN = 80%, Melty = 20% | | |
| | **Thickness (mm)** | 4.1 | 4.2 | 3.77 |
| | **Initial NW Weight (g)** | 1.46 | 1.48 | 1.42 |
| | **Total Weight After Coating (g)** | 23.5 | 23.5 | 26.8 |
| | **Added NaS Amount (g)** | 22.1 | 22.1 | 25.4 |
| | **NaS to NW ratio** | 15 | 15 | 18 |
| | **BW (gsm)** | 950 | 920 | 980 |
| | | | | |

| **Time (min)** | | **T (°C)** | **T (°C)** | **T (°C)** |
|---|---|---|---|---|
| 0:00 | | 26 | 26 | 28 |
| 0:15 | | 29 | 28 | 29 |
| 0:30 | | 37 | 38 | 38 |
| 0:45 | | 53 | 54 | 51 |
| 1:00 | | 63 | 63 | 57 |
| 1:15 | | 71 | 72 | 62 |
| 1:30 | | 77 | 77 | 67 |
| 1:45 | | 81 | 81 | 72 |
| 2:00 | | 81 | 87 | 76 |
| 2:15 | | 83 | 94 | 82 |
| 2:30 | | 89 | 101 | 88 |
| 2:45 | | 96 | 106 | 95 |
| 3:00 | | 105 | 111 | 100 |
| 3:15 | | 112 | 118 | 109 |
| 3:30 | | 121 | 124 | 116 |
| 3:45 | | 128 | 131 | 123 |
| 4:00 | | 133 | 140 | 128 |
| 5:00 | | 148 | 163 | 147 |
| 6:00 | | 160 | 182 | 161 |

As shown in Table 6, OPAN NW showed little to no difference in BW and thermal barrier performance by changing the concentration of the coating solution. This is in analogy with the previous conclusion in Example 3 where OPAN had relatively poor barrier performance compared to PVA NW due to the unfavorable coating quality. To confirm the importance of surface chemistry, i.e., the hydrophilicity of the fibers, an identical experiment was designed for PVA NW.

### Example 5: Effect of water content during coating: PVA NW

Table 7 summarizes the temperature profile of PVA NW as the core layer but using a different concentration of NaS solution. All samples were sandwiched between two 120 gsm OPAN carded webs. Unlike the case with OPAN NW as the core material, PVA NW shows better coating quality and fire barrier performance by adding more water to the solution. This not only promotes the solution to get into the tortuous web more efficiently but also adds more NaS attached to the web during the roll coating process. Comparing with others, PVA Less Viscosity sample has the maximum NaS to NW weight ratio, supporting the fact that hydrophilicity of the fiber matters. While the thermal insulation property of PVA based NW was better, other factors such as cost, BW, drying time, etc., need to be taken into consideration when choosing the optimal article configuration.

**Table 7. The temperature profile for PVA NW coated with different concentration of NaS solution.**

| **Sample Name** | | **PVA Control** | **PVA Less NaS** | **PVA Less Viscosity** |
|---|---|---|---|---|
| **NaS Solution** | **Solution/Water (g/g)** | 60/0 | 45/15 | 60/30 |
| | **Total NaS solids (g)** | 22.5 | 16.9 | 22.5 |
| **Core Material** | **Thickness (mm)** | 1.7 | 1.1 | 1.7 |
| | **Initial NW Weight (g)** | 1.40 | 1.52 | 1.44 |
| | **Total Weight After Coating (g)** | 23.9 | 26.2 | 32.4 |
| | **Added NaS Amount (g)** | 22.5 | 24.6 | 30.9 |
| | **NaS to NW ratio** | 16 | 16 | 22 |
| | **BW (gsm)** | 1030 | 1030 | 1380 |
| | | | | |

| **Time (min)** | | **T (°C)** | **T (°C)** | **T (°C)** |
|---|---|---|---|---|
| 0:00 | | 25 | 24 | 26 |
| 0:15 | | 29 | 28 | 28 |
| 0:30 | | 42 | 42 | 37 |
| 0:45 | | 81 | 57 | 46 |
| 1:00 | | 97 | 70 | 49 |
| 1:15 | | 100 | 78 | 53 |
| 1:30 | | 99 | 81 | 58 |
| 1:45 | | 96 | 82 | 62 |
| 2:00 | | 89 | 82 | 66 |
| 2:15 | | 86 | 84 | 70 |
| 2:30 | | 86 | 84 | 71 |
| 2:45 | | 88 | 83 | 74 |
| 3:00 | | 93 | 85 | 76 |
| 3:15 | | 105 | 90 | 80 |
| 3:30 | | 118 | 101 | 83 |
| 3:45 | | 125 | 107 | 84 |
| 4:00 | | 131 | 115 | 87 |
| 5:00 | | 140 | 138 | 95 |
| 6:00 | | 130 | 153 | 106 |

The preceding description, given to enable one of ordinary skill in the art to practice the claimed disclosure, is not to be construed as limiting the scope of the disclosure, which is defined by the claims.

## Claims

1. A nonwoven fibrous web comprising
a flame retardant nonwoven fabric coated with a fire retardant, wherein the fire retardant comprises ammonium polyphosphate or alkali metal silicate; and wherein the flame retardant nonwoven fabric has a first major surface and an opposed second major surface;
a first nonwoven fabric covering at least a portion of the first major surface; and
a second nonwoven fabric covering at least a portion of the second major surface;
wherein the first and second nonwoven fabrics each comprise
a plurality of randomly-oriented fibers, the plurality of randomly-oriented fibers comprising:
at least 60 wt% of oxidized polyacrylonitrile fibers; and
from 0 to less than 40 wt% of reinforcing fibers having an outer surface
comprised of a (co)polymer with a melting temperature of from 100°C to 350°C;
wherein the flame retardant nonwoven fabric and the first and second nonwoven fabrics are bonded together to form a cohesive nonwoven fibrous web.

2. The nonwoven fibrous web of claim 1, wherein the reinforcing fibers comprise at least one of monocomponent or multi-component fibers.

3. The nonwoven fibrous web of claim 2, wherein the reinforcing fiber comprises polyethylene terephthalate, polyphenylene sulfide, poly-aramide, polylactic acid.

4. The nonwoven fibrous web of claim 2, wherein the reinforcing fibers are multicomponent fibers having an outer sheath comprising polyolefin.

5. The nonwoven fibrous web of claim 2, wherein the polyolefin is selected from the group consisting of polyethylene, polypropylene, polybutylene, polyisobutylene, polyethylene naphthalate, and combinations thereof.

6. The nonwoven fibrous web of any of claims 1 to 5, wherein the nonwoven fabric has a thickness of from 2 mm to 1 cm.

7. The nonwoven fibrous web of any of claims 1 to 6, wherein the nonwoven fabric has a basis weight of from 30 gsm to 500 gsm.

8. The nonwoven fibrous web of any of claims 1 to 7, wherein the nonwoven fabric has a tensile strength of more than 28 kPa.

9. The nonwoven fibrous web of any of claims 1 to 8, wherein the nonwoven fabric passes the UL-94V0 flame test

10. The nonwoven fibrous web of any of claims 1 to 9, wherein the nonwoven fabric passes the Burn Test.

11. The nonwoven fibrous web of any of claims 1 to 10, wherein the plurality of randomly-oriented fibers has an average bulk density of from 100 kg/m³ to 1500 kg/m³.

12. The nonwoven fibrous web of any of claims 1 to 11, wherein the non-woven fibrous web has a thermal conductivity coefficient of less than 0.04 W/K-m at 25°C in its relaxed configuration.

13. The nonwoven fibrous web of any of claims 1 to 10, wherein the plurality of randomly-oriented fibers contains 0-40 wt% of reinforcing fibers having an outer surface comprised of a (co)polymer with a melting temperature of from 100°C to 350°C.

14. The nonwoven fibrous web of any of claims 1 to 13, wherein the oxidized polyacrylonitrile fibers have a median Effective Fiber Diameter of from 5 micrometers to 50 micrometers.

15. The nonwoven fibrous web of any of claims 1 to 14, wherein the flame retardant nonwoven fabric comprises a bamboo nonwoven, a wool nonwoven, a polyvinyl alcohol nonwoven, or a nonwoven fabric comprising a plurality of randomly-oriented fibers, wherein the plurality of randomly-oriented fibers comprise at least 60 wt% of oxidized polyacrylonitrile fibers and from 0 to less than 40 wt% of reinforcing fibers having an outer surface comprised of a (co)polymer with a melting temperature of from 100°C to 350°C.

## Patentansprüche

1. Eine Faservliesbahn, aufweisend
einen flammhemmenden Vliesstoff, der mit einem flammhemmenden Mittel beschichtet ist, wobei das flammhemmende Mittel Ammoniumpolyphosphat oder Alkalimetallsilikat aufweist; und wobei der flammhemmende Vliesstoff eine erste Hauptoberfläche und eine gegenüberliegende zweite Hauptoberfläche aufweist;
einen ersten Vliesstoff, der zumindest einen Abschnitt der ersten Hauptoberfläche bedeckt; und
einen zweiten Vliesstoff, der zumindest einen Abschnitt der zweiten Hauptoberfläche bedeckt;
wobei der erste und der zweite Vliesstoff jeweils aufweisen
eine Mehrzahl von zufällig ausgerichteten Fasern, wobei die Mehrzahl von zufällig ausgerichteten Fasern aufweist:
zu mindestens 60 Gew.-% oxidierte Polyacrylnitrilfasern; und
zu 0 bis weniger als 40 Gew.-% Verstärkungsfasern mit einer Außenoberfläche aus einem (Co)polymer mit einer Schmelztemperatur von 100 °C bis 350 °C;
wobei der flammhemmende Vliesstoff und der erste und der zweite Vliesstoff miteinander verbunden sind, um eine zusammenhängende Faservliesbahn zu bilden.

2. Die Faservliesbahn nach Anspruch 1, wobei die Verstärkungsfasern mindestens eine von Mono- oder Mehrkomponentenfasern aufweisen.

3. Die Faservliesbahn nach Anspruch 2, wobei die Verstärkungsfaser Polyethylenterephthalat, Polyphenylensulfid, Poly-Aramid, Polymilchsäure aufweist.

4. Die Faservliesbahn nach Anspruch 2, wobei die Verstärkungsfasern Mehrkomponentenfasern sind, die eine äußere Hülle aufweisen, die Polyolefin aufweist.

5. Die Faservliesbahn nach Anspruch 2, wobei das Polyolefin ausgewählt ist aus der Gruppe bestehend aus Polyethylen, Polypropylen, Polybutylen, Polyisobutylen, Polyethylennaphthalat und Kombinationen davon.

6. Die Faservliesbahn nach einem der Ansprüche 1 bis 5, wobei der Vliesstoff eine Dicke von 2 mm bis 1 cm aufweist.

7. Die Faservliesbahn nach einem der Ansprüche 1 bis 6, wobei der Vliesstoff ein Flächengewicht von 30 g/m² bis 500 g/m² aufweist.

8. Die Faservliesbahn nach einem der Ansprüche 1 bis 7, wobei der Vliesstoff eine Zugfestigkeit von mehr als 28 kPa aufweist.

9. Die Faservliesbahn nach einem der Ansprüche 1 bis 8, wobei der Vliesstoff den UL-94VO-Flammentest besteht.

10. Die Faservliesbahn nach einem der Ansprüche 1 bis 9, wobei der Vliesstoff die Brandprüfung besteht.

11. Die Faservliesbahn nach einem der Ansprüche 1 bis 10, wobei die Mehrzahl von zufällig ausgerichteten Fasern eine durchschnittliche Rohdichte von 100 kg/m³ bis 1500 kg/m³ aufweist.

12. Die Faservliesbahn nach einem der Ansprüche 1 bis 11, wobei die Faservliesbahn einen Wärmeleitfähigkeitskoeffizienten von weniger als 0,04 W/K-m bei 25 °C in ihrer entspannten Konfiguration aufweist.

13. Die Faservliesbahn nach einem der Ansprüche 1 bis 10, wobei die Mehrzahl von zufällig ausgerichteten Fasern zu 0 bis 40 Gew.-% Verstärkungsfasern mit einer Außenoberfläche enthält, die aus einem (Co)polymer mit einer Schmelztemperatur von 100 °C bis 350 °C besteht.

14. Die Faservliesbahn nach einem der Ansprüche 1 bis 13, wobei die oxidierten Polyacrylnitril-Fasern einen mittleren Effektivfaserdurchmesser von 5 Mikrometern bis 50 Mikrometern aufweisen.

15. Die Faservliesbahn nach einem der Ansprüche 1 bis 14, wobei der flammhemmende Vliesstoff ein Bambus-Vlies, ein Wollvlies, ein Polyvinylalkoholvlies oder einen Vliesstoff umfasst, der eine Mehrzahl von zufällig ausgerichteten Fasern aufweist, wobei die Mehrzahl von zufällig ausgerichteten Fasern zu mindestens 60 Gew.-% oxidierte Polyacrylnitrilfasern und zu 0 bis weniger als 40 Gew.-% Verstärkungsfasern aufweisen, die eine Außenoberfläche aufweisen, die aus einem (Co)polymer mit einer Schmelztemperatur von 100 °C bis 350 °C besteht.

## Revendications

1. Bande fibreuse non tissée comprenant
un tissu non tissé retardateur de flamme revêtu d'un retardateur de feu, dans laquelle le retardateur de feu comprend du polyphosphate d'ammonium ou du silicate de métal alcalin ; et dans laquelle le tissu non tissé retardateur de flamme a une première surface principale et une seconde surface principale opposée ;
un premier tissu non tissé couvrant au moins une partie de la première surface principale ; et
un second tissu non tissé couvrant au moins une partie de la seconde surface principale ;
dans laquelle les premier et second tissus non tissés comprennent chacun
une pluralité de fibres orientées de manière aléatoire, la pluralité de fibres orientées de manière aléatoire comprenant :
au moins 60 % en poids de fibres de polyacrylonitrile oxydé ; et
de 0 à moins de 40 % en poids de fibres de renforcement ayant une surface externe composée d'un (co)polymère présentant une température de fusion allant de 100 °C à 350 °C ;
dans laquelle le tissu non tissé retardateur de flamme et les premier et second tissus non tissés sont liés ensemble pour former une bande fibreuse non tissée cohésive.

2. Bande fibreuse non tissée selon la revendication 1, dans laquelle les fibres de renforcement comprennent au moins l'une de fibres à un seul composant ou à plusieurs composants.

3. Bande fibreuse non tissée selon la revendication 2, dans laquelle la fibre de renforcement comprend du téréphtalate de polyéthylène, du sulfure de polyphénylène, du poly-aramide, de l'acide polylactique.

4. Bande fibreuse non tissée selon la revendication 2, dans laquelle les fibres de renforcement sont des fibres à plusieurs composants ayant une gaine externe comprenant une polyoléfine.

5. Bande fibreuse non tissée selon la revendication 2, dans laquelle la polyoléfine est choisie dans le groupe constitué du polyéthylène, du polypropylène, du polybutylène, du poly-isobutylène, du naphtalate de polyéthylène, et des combinaisons de ceux-ci.

6. Bande fibreuse non tissée selon l'une quelconque des revendications 1 à 5, dans laquelle le tissu non tissé a une épaisseur allant de 2 mm à 1 cm.

7. Bande fibreuse non tissée selon l'une quelconque des revendications 1 à 6, dans laquelle le tissu non tissé a une masse surfacique allant de 30 g/m² à 500 g/m².

8. Bande fibreuse non tissée selon l'une quelconque des revendications 1 à 7, dans laquelle le tissu non tissé a une résistance à la traction supérieure à 28 kPa.

9. Bande fibreuse non tissée selon l'une quelconque des revendications 1 à 8, dans laquelle le tissu non tissé passe le test à la flamme UL-94V0

10. Bande fibreuse non tissée selon l'une quelconque des revendications 1 à 9, dans laquelle le tissu non tissé passe le test de combustion.

11. Bande fibreuse non tissée selon l'une quelconque des revendications 1 à 10, dans laquelle la pluralité de fibres orientées de manière aléatoire a une masse volumique apparente moyenne allant de 100 kg/m³ à 1 500 kg/m³.

12. Bande fibreuse non tissée selon l'une quelconque des revendications 1 à 11, dans laquelle la bande fibreuse non tissée a un coefficient de conductivité thermique inférieur à 0,04 W/K-m à 25 °C dans sa configuration relaxée.

13. Bande fibreuse non tissée selon l'une quelconque des revendications 1 à 10, dans laquelle la pluralité de fibres orientées de manière aléatoire contient 0 à 40 % en poids de fibres de renforcement ayant une surface externe composée d'un (co)polymère présentant une température de fusion allant de 100 °C à 350 °C.

14. Bande fibreuse non tissée selon l'une quelconque des revendications 1 à 13, dans laquelle les fibres de polyacrylonitrile oxydé ont un diamètre effectif de fibre médian allant de 5 micromètres à 50 micromètres.

15. Bande fibreuse non tissée selon l'une quelconque des revendications 1 à 14, dans laquelle le tissu non tissé retardateur de flamme comprend un non-tissé de bambou, un non-tissé de laine, un non-tissé d'alcool polyvinylique, ou un tissu non tissé comprenant une pluralité de fibres orientées de manière aléatoire, dans laquelle la pluralité de fibres orientées de manière aléatoire comprennent au moins 60 % en poids de fibres de polyacrylonitrile oxydé et de 0 à moins de 40 % en poids de fibres de renforcement ayant une surface externe composée d'un (co)polymère présentant une température de fusion allant de 100 °C à 350 °C.
